# EUROPEAN PATENT SPECIFICATION

(11) **EP 0 550 470 B1**
(45) Date of publication and mention of the grant of the patent: **21.06.1995**
(21) Application number: 91915505.1
(22) Date of filing: 05.09.1991
(51) Int. Cl.: C02F 1/52, C02F 1/28

(54) **Improved Filtration technique for the treatment of oxidised photographic processor effluents**
Verbesserte Filtertechnik für die Behandlung von oxidierten photographischen Abwässern
Procédé amelioré de filtrage pour le traitement d'effluents photographiques oxydés

(30) Priority: 07.09.1990 GB 9019607
(43) Date of publication of application: 14.07.1993
(73) Proprietor: KODAK LIMITED, Harrow, Middlesex HA1 4TY (GB); EASTMAN KODAK COMPANY, Rochester, New York 14650-2201 (US)
(72) Inventor: FYSON, John Richard, Harrow, Middlesex HA1 4TY (GB); GLOVER, Martyn Stuart, Harrow, Middlesex HA1 4TY (GB); HENSON, David McDonald, Harrow Middlesex HA1 4TY (GB)
(74) Representative: Haile, Helen Cynthia
(86) International application number: EP9101682
(87) International publication number: WO9204283

(56) References cited:
- EP-A- 0 164 225
- EP-A- 0 265 941
- CH-A- 545 752
- CH-A- 625 425

## Description

This invention relates to effluent treatment and in particular to the removal of precipitates in treated and untreated photographic processor effluents by an improved filtration technique.

The overflow from a photographic processor will typically consist of polluting substances such as heavy metals, sequestering agents, substances that have a high oxygen demand and colour developing agents and their derivatives, straight disposal of which contravenes sewer regulations. It is therefore essential that the overflow is converted by chemical or physical means to a liquid which can be poured into the sewer and/or a residual solid which can be removed to a place of safe and legal disposal.,

The effluent from photographic processors can be treated to precipitate out potentially polluting compounds as described in co-pending published. European Application (EP-A-0 548 107, Application No.91915113.4), of even date herewith. In this process an oxidising agent is added to reduce the chemical oxygen demand of the effluent by converting the reducing sulphur compounds to their oxidised form by destruction of thiosulphate and by precipitation of silver salts, followed by the addition of a base, such as a water soluble salt of an alkaline earth metal, to precipitate out heavy metal ions. These precipitates can be, however, difficult to filter or separate.

The addition of materials of high bulk to improve filtration is a technique already known in the art. However this process has hitherto not been applied to assist the precipitation and filtration of effluents that have been treated to precipitate out polluting materials and in particular to treated photographic effluents.

If an inert powder of high bulk is added to the precipitate from a liquid effluent before filtration it has been found that the rate of filtration is improved by preventing the pores in the filter medium from becoming clogged, thus reducing the separation time. Not only is the filtration more efficient in that less precipitate is found in the filtrate but the pressure required to give rapid filtration can be reduced. Similarly addition of such a powder before settling improves the rate at which the solid phase will settle.

The effluent to be treated may, for example, have arisen from any of the photographic processes described in Item 308119, Research Disclosure December 1989, Industrial Opportunities Ltd., Hants., U.K., and especially sections XIX, XX and XXIII thereof.

According to the present invention there is provided a method of separation of a precipitate from a photographic processor effluent that has been treated with an oxidising agent, comprising the addition of (a) a water-soluble salt of an alkaline earth metal followed by (b) an inert powder of high bulk, prior to filtration or settling.

The inert powder may be aluminium hydroxide, wet sawdust or any other medium of high bulk but conveniently a diatomaceous earth, such as kieselguhr, is used, preferably in an amount of between 10 and 100 g/litre of effluent, most preferably between 25 and 35 g/litre.

The invention will now be described with reference to the following Example which does not in any way limit the scope of the invention.

### Example Filtration with Kieselguhr

A model treated photographic processor effluent was made by stirring 30g calcium powder with 1 litre of water (The use of calcium hydroxide to precipitate out heavy metal ions has been described in the afore-mentioned co-pending U.K. Application).

For the filtration test a 7cm Buchner funnel was fixed into a Buchner flask using an appropriate adaptor. The funnel was fitted with a piece of Whatman No. 41 fast ashless filter paper cut to size. The Buchner flask was connected to a water pump and the water turned on. 100ml of the model treated effluent was poured into the funnel and the filtration time was measured. A further 100ml of the treated effluent was poured through the same funnel complete with paper and filtrate. The filtration time was again recorded. This was repeated again with a further 100ml of the treated effluent.

The entire procedure was repeated after the addition of 30g/l kieselguhr powder to the model treated effluent. The three times were recorded. A comparison of the results is shown below.

**TABLE**

| Process | Filtering time (seconds) | |
|---|---|---|
| | No kieselguhr | With kieselguhr |
| 1st 100ml treated effluent | 22 | 8 |
| 2nd 100ml treated effluent | 48 | 12 |
| 3rd 100ml treated effluent | 73 | 17 |

As can be seen from the Table, the effluent treated with kieselguhr filters at least three times more quickly and four times more quickly when there is already a precipitate on the filter paper.

## Claims

1. A method of separation of a precipitate from a photographic processor effluent that has been treated with an oxidising agent, comprising the addition of (a) a water-soluble salt of an alkaline earth metal followed by (b) an inert powder of high bulk, prior to filtration or settling.

2. A method as claimed in claim 1, in which the inert powder is a diatomaceous earth, aluminium hydroxide or wet sawdust.

3. A method as claimed in claim 2, in which the diatomaceous earth is kieselguhr.

4. A method as claimed in any one of the preceding claims, in which the inert powder is added in an amount of from 10 to 100 g/l effluent.

5. A method as claimed in claim 4, in which the inert powder is added in an amount of from 25 to 35 g/l effluent.

## Patentansprüche

1. Verfahren zur Abtrennung eines Niederschlages von dem Abwasser einer photographischen Entwicklungsanlage, das mit einem Oxidationsmittel behandelt worden ist, bei dem man vor dem Filtrieren oder dem Absitzenlassen zugibt (a) ein wasserlösliches Salz eines Erdalkalimetalles, gefolgt von (b) einem inerten Pulver einer hohen Masse.

2. Verfahren nach Anspruch 1, bei dem das inerte Pulver eine Diatomeenerde, Aluminiumhydroxid oder ein feuchtes Sägemehl ist.

3. Verfahren nach Anspruch 2, bei dem die Diatomeenerde Kieselgur ist.

4. Verfahren nach einem der vorstehenden Ansprüche, bei dem das inerte Pulver in einer Menge von 10 bis 100 g/l Abwasser zugegeben wird.

5. Verfahren nach Anspruch 4, bei dem das inerte Pulver in einer Menge von 25 bis 35 g/l Abwasser zugegeben wird.

## Revendications

1. Procédé de séparation d'un précipité d'un effluent photographique provenant d'une machine de traitement qui a été traité par un agent oxydant, caractérisé en ce qu'il comprend l'addition (a) d'un sel d'un métal alcalino-terreux soluble dans l'eau suivi par (b) une poudre inerte ayant un volume important avant une filtration ou une sédimentation.

2. Procédé selon la revendication 1, dans lequel la poudre inerte est de la terre de diatomées, de l'hydroxyde d'aluminium ou de la sciure humide.

3. Procédé selon la revendication 2, dans lequel la terre de diatomées est du kieselguhr.

4. Procédé selon l'une des revendications précédentes dans lequel la poudre inerte est ajoutée en quantité de l'ordre de 10 à 100 g/l d'effluent.

5. Procédé selon la revendication 4, dans lequel la poudre inerte est ajoutée en quantité de l'ordre de 25 à 35 g/l d'effluent.
